# EUROPÄISCHE PATENTSCHRIFT

(11) **EP 2 083 115 B1**
(45) Veröffentlichungstag und Bekanntmachung des Hinweises auf die Patenterteilung: **22.12.2010**
(21) Anmeldenummer: 08168824.4
(22) Anmeldetag: 11.11.2008
(51) Int. Cl.: D06N 3/00, D06N 7/00, B32B 5/18, B32B 27/12

(54) **Decklage für plattenförmige Körper**
Liner for plate-shaped body
Couche superficielle pour corps en forme de plaques

(30) Priorität: 21.01.2008 DE 102008005423
(43) Veröffentlichungstag der Anmeldung: 29.07.2009
(73) Patentinhaber: Schillings, Hans, 41379 Brüggen (DE)
(72) Erfinder: Schillings, Hans, 41379 Brüggen (DE)
(74) Vertreter: Bonsmann, Joachim Bernhard

(56) Entgegenhaltungen:
- EP-A- 0 159 514
- EP-A- 1 582 622
- WO-A-2005/040475
- DE-A1-102007 003 787
- US-A1- 2002 160 210
- US-A1- 2005 202 742
- US-A1- 2007 148 430

## Beschreibung

Die Erfindung betrifft eine Decklage für plattenförmige Körper in Form eines Flächengebildes, zum Aufbringen als Tragelement von Roll- oder Klappbahnen auf Dämmstoffplatten auf Basis von Hartschaum wie geschäumtem Polyurethan oder Polystyrol, mit einer flexibel ausgebildeten Trägerbahn, die eine Beschichtung auf Basis mineralischer Werkstoffe mit organisch basierendem Bindemittelanteil aufweist.

Es ist bekannt, mineralisch beschichtete Glasfaservliese als Decklagen für Dämmstoffplatten auf der Basis von geschäumtem Polyurethan einzusetzen. Diese bekannten Decklagen sind relativ spröde und können bei einer Verformung leicht brechen und reißen. Der Einsatz derartiger bekannter Decklagen ist nur auf ebenen Oberflächen möglich.

Aus der EP 1 582 622 A2 ist ein Decklagenmaterial bekannt, bei dem auf ein Vlies oder Gewebe auf beiden Seiten jeweils eine Beschichtung aus pulverförmigem, anorganischen Material und Bindemitteln angeordnet ist. Als Bindemittel werden solche auf anorganischer und solche auf organischer Grundlage erwähnt, beispielsweise "Bindemittel auf Kunststoffbasis".

Die US 2002/0160210 A1 zeigt einen Strukturartikel, der durch ionische Beschichtung einer Seite eines Substrats und Bedeckung der anderen Seite mit einem wasserundurchlässigem Material, nämlich einer Metallfolie oder einer vorgeformten Kunststofffolie hergestellt wird.

Aus der EP 0 159 514 A1 ist ein Decklagematerial auf Vlies- oder Gewebebasis mit einer einseitigen Beschichtung aus einem pulverförmigen anorganischen Material und einem Bindemittel bekannt.

Aus der US 2005/0202742 A1 ist die Herstellung einer beidseitig mit einer Fasermatte belegten Gipsplatte bekannt. Dabei ist eine freie Oberfläche einer Fasermatte mit einer Beschichtung versehen, die ein organisches Bindemittel enthalten kann.

Aus der US 2007/0148430 A1 ist eine Beschichtung einer Fasermatte bekannt, die ein plättchenförmiges Mineralpigment und organisches Bindemittel aufweist.

Aus WO 2005/040475 A ist eine mit einer beschichteten Glasfasermatte belegte Gipsplatte bekannt. Die Glasfasermatte ist mit einer Beschichtung versehen, die ein organisches Bindemittel aufweisen kann.

Der Erfindung liegt die Aufgabe zugrunde, Decklagen der eingangs genannten Art so auszubilden, dass sie ohne zu brechen verformt und/oder geknickt werden können.

Zur Lösung dieser Aufgabe ist erfindungsgemäß vorgesehen, dass der Bindemittelanteil der Beschichtung eine Dispersion aus Styrol und Acrylsäureestern, Styrol-Butadien Copolymer sowie eine Acrylcopolymerdispersion aufweist, wobei die anteilige Dispersion aus Styrol und Acrylsäureestern im Bereich von 5 Gewichtsprozenten, die Anteile der Dispersion aus Styrol-Butadien Copolymer im Bereich von 8 Gewichtsprozenten und die Anteile der Acrylcopolymerdispersion im Bereich von 2 Gewichtsprozenten liegen. Somit ist die Beschichtung auf Basis mineralischer Werkstoffe mit einem organisch basierenden Bindemittelanteil versehen, wobei die Zusammensetzung des Bindemittelanteils unter Angabe der einzelnen Bestandteile angegeben ist. Hierdurch wird erreicht, dass nicht allein die Trägerbahn flexibel bzw. knickbar ist, sondern die gesamte Decklage aus Trägerbahn und Beschichtung.

Die Beschichtung ist zweckmäßigerweise auf derjenigen Flachseite der Trägerbahn angebracht, die bei bestimmungsgemäßer Verwendung der Decklage dem plattenförmigen Körper abgewandt ist.

Entsprechend einer Ausgestaltung der Erfindung ist die Trägerbahn als Glasfaservlies ausgebildet und weist anteilig Glasfasern und Polyesterfasern auf, wobei vorzugsweise der Glasfaseranteil im Bereich von 80 Gewichtsprozenten und der Polyesterfaseranteil im Bereich von 20 Gewichtsprozenten liegt. Dadurch, dass die Trägerbahn Polyesterfasern aufweist, wird erreicht, dass diese flexibel und knickbar ist.

Alternativ kann auch vorgesehen sein, dass der Vliesanteil der Trägerbahn überwiegend als Polyestervlies ausgebildet ist.

Die mineralischen Werkstoffe der Beschichtung weisen Calciumcarbonat und Aluminiumhydroxid auf. Vorzugsweise weist die Beschichtung Calciumcarbonat im Bereich von 29 Gewichtsprozenten und Aluminiumhydroxid im Bereich von 55 Gewichtsprozenten auf.

Weiterhin kann vorgesehen sein, dass die Beschichtung Zusatzstoffe enthält, und zwar vorzugsweise jeweils im Bereich von 0,1 Gewichtsprozenten Netzmittel, im Bereich von 0,8 Gewichtsprozenten Cellulosederivate sowie ggf. im Bereich von 0,2 Gewichtsprozenten Farbstoffe.

Die erfindungsgemäße Decklage eignet sich nicht nur zum Aufbringen auf Dämmstoffplatten. Eine weitere Anwendungsmöglichkeit für die erfindungsgemäße Beschichtung besteht darin, als Oberlage sog. Stahlsandwichelemente eingesetzt zu werden. Bekannte Stahlsandwichelemente weisen einen geschäumten Kern mit beidseitig wenigstens teilweise profiliert ausgebildeten metallischen Decklagen auf. Die erfindungsgemäße Decklage eignet sich dazu, eine der beiden Decklagen aus Stahlblech durch die erfindungsgemäße Decklage zu ersetzen. Die erfindungsgemäße Decklage wird auf die ebene Oberfläche des Stahlsandwichelementes aufgebracht, vorzugweise aufgeschäumt. Bei der bestimmungsgemäßen Verwendung der Stahlsandwichbauelemente erfolgt die Anbringung so, dass die erfindungsgemäße Decklage innenseitig liegt.

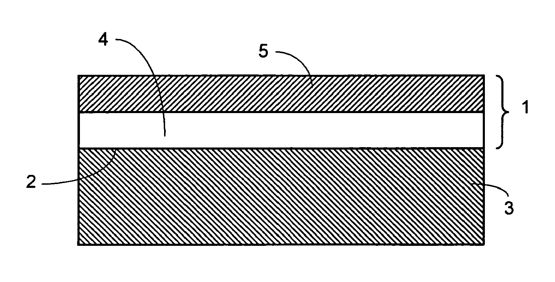

Ausführungsbeispiele der Erfindung werden nachfolgend unter Bezugnahme auf die beigefügte Zeichnung erläutert.

Die einzige Figur zeigt eine Decklage 1, die auf einer Flachseite 2 eines beispielsweise als Dämmstoffplatte auf Basis von Hartschaum ausgebildeten plattenförmigen Körpers 3 aufgebracht ist. Die Decklage 1 weist eine flexibel ausgebildete Trägerbahn 4 auf, auf der wiederum eine Beschichtung 5 auf Basis mineralischer Werkstoffe mit gering organisch basierendem Bindemittelanteil aufgebracht ist.

Die Trägerbahn 4 ist als Faservlies ausgebildet und weist anteilig Glasfasern und Polyesterfasern auf. Beispielsweise liegt der Glasfaseranteil im Bereich von 80 Gewichtsprozenten und der Polyesterfaseranteil im Bereich von 20 Gewichtsprozenten. Alternativ besteht auch die Möglichkeit, dass der Vliesanteil der Trägerbahn überwiegend als Polyestervlies ausgebildet ist. Mit den Polyesterfasern wird erreicht, dass die Trägerbahn flexibel und knickbar ist. Je höher der Polyesterfaseranteil ist, umso höher ist die Flexibilität der Trägerbahn.

Bei einem Ausführungsbeispiel, bei dem die Trägerbahn ein Gemisch im Bereich von 80 % Glasfasern und 20 % Polyesterfasern aufweist, beträgt das Flächengewicht ca. 50 g/m². Die Materialdicke beträgt ca. 0,45 mm.

Bei einer reine Polyesterfasern aufweisenden weiteren Trägerbahn 4 liegt das Flächengewicht bei ca. 120 g/m² und die Materialdicke beträgt ca. 1 mm.

Die Beschichtung 5 ist mineralisch basierend und weist einen geringen organisch basierenden Bindemittelanteil auf. Das Flächengewicht der Beschichtung 5 liegt bei einem Ausführungsbeispiel bei ca. 200 g/m². Die Beschichtung 5 weist Calciumcarbonat und Aluminiumhydroxid auf, wobei die Anteile jeweils im Bereich von 29 Gewichtsprozenten Calciumcarbonat und im Bereich von 55 Gewichtsprozenten Aluminiumhydroxid liegen.

Der Bindemittelanteil der Beschichtung weist eine Dispersion aus Styrol und Acrylsäureestern im Bereich von 5 Gewichtsprozenten, Styrol-Butadien Copolymer im Bereich von 8 Gewichtsprozenten sowie eine Acrylcopolymerdispersion im Bereich von 2 Gewichtsprozenten auf.

Weiterhin enthält die Beschichtung vorzugsweise Zusatzstoffe, und zwar bevorzugt jeweils im Bereich von 0,1 Gewichtsprozenten Netzmittel, im Bereich von 0,8 Gewichtsprozenten Cellulosederivate sowie ggf. Farbstoffe im Bereich von 0,2 Gewichtsprozenten.

Das Gesamtgewicht der erfindungsgemäßen Decklage liegt bei einem Ausführungsbeispiel vorzugsweise in der Größenordnung von ca. 220 g/m².

Die Beschichtung ist flexibel, abwaschbar, scheuerfest sowie diffusionsoffen.

Wie bereits erwähnt, kann die erfindungsgemäße Decklage auch als Decklage für Stahlsandwichplatten eingesetzt werden, wobei die metallische Decklage, die bei bestimmungsgemäßem Gebrauch der Innenseite eines Gebäudes zugewandt ist, durch die erfindungsgemäße Decklage ersetzt ist. Vorteilhaft hierbei ist u.a., dass die bei der Verlegung von Stahlsandwichplatten, z.B. einer Verkleidung von Werkhallen, entstehenden Verschmutzungen aufgrund der hohen Scheuerbeständigkeit der erfindungsgemäßen Decklage leicht entfernt werden können.

Eine weitere Verwendungsmöglichkeit der erfindungsgemäßen Decklage besteht darin, als Tragelement von Roll- oder Klappbahnen in der Polyurethan- oder Polystyrol-Dämmstoffindustrie eingesetzt zu werden. Soweit es sich um Rollbahnen handelt, werden Dämmplatten auf die erfindungsgemäße Decklage kaschiert. Anschließend werden die Dämmplatten quer zur Rollrichtung eingeschlitzt und aufgerollt. Soweit es sich um Klappbahnen handelt, werden Dämmplatten auf die erfindungsgemäße Decklage kaschiert und zusammengeklappt. Nach dem Stand der Technik werden als Tragelemente für derartige Roll- oder Klappbahnen bituminierte Glasvliese oder unbeschichtete Glasvliese eingesetzt, was bei einem Abwickeln oder Aufklappen der Bahnen oft zu Bruchstellen führt. Dieser Nachteil wird durch einen Einsatz flexibel und knickbar ausgebildeter Decklagen gemäß der vorliegenden Erfindung vermieden.

## Patentansprüche

1. Decklage (1) für plattenförmige Körper (3) in Form eines Flächengebildes, zum Aufbringen als Tragelement von Roll- oder Klappbahnen auf Dämmstoffplatten auf Basis von Hartschaum wie geschäumtem Polyurethan oder Polystyrol, mit einer flexibel ausgebildeten Trägerbahn (4), die eine Beschichtung (5) auf Basis mineralischer Werkstoffe mit organisch basierendem Bindemittelanteil aufweist,
**dadurch gekennzeichnet, dass**
der Bindemittelanteil der Beschichtung (5) eine Dispersion aus Styrol und Acrylsäureestern, Styrol-Butadien Copolymer sowie eine Acrylcopolymerdispersion aufweist, wobei die Anteile der Dispersion aus Styrol und Acrylsäureestern im Bereich von 5 Gewichtsprozenten, die Anteile der Dispersion aus Styrol-Butadien Copolymer im Bereich von 8 Gewichtsprozenten und die Anteile der Acrylcopolymerdispersion im Bereich von 2 Gewichtsprozenten liegen.

2. Decklage nach Anspruch 1,
**dadurch gekennzeichnet, dass**
die Beschichtung (5) auf derjenigen Flachseite der Trägerbahn (4) angebracht ist, die bei bestimmungsgemäßer Verwendung der Decklage dem plattenförmigen Körper (3) abgewandt ist.

3. Decklage nach Anspruch 1 oder 2,
**dadurch gekennzeichnet, dass**
die Trägerbahn als Glasfaservlies ausgebildet ist und anteilig Glasfasern und Polyesterfasern aufweist.

4. Decklage nach Anspruch 3,
**dadurch gekennzeichnet, dass**
der Glasfaseranteil im Bereich von 80 Gewichtsprozenten und der Polyesterfaseranteil im Bereich von 20 Gewichtsprozenten liegen.

5. Decklage nach Anspruch 1,
**dadurch gekennzeichnet, dass**
der Vliesanteil der Trägerbahn (4) überwiegend als Polyestervlies ausgebildet ist.

6. Decklage nach einem der Ansprüche 1 bis 5,
**dadurch gekennzeichnet, dass**
die mineralischen Werkstoffe der Beschichtung (5) Calciumcarbonat und Aluminiumhydroxid aufweisen.

7. Decklage nach Anspruch 6,
**dadurch gekennzeichnet, dass**
die Beschichtung (5) Calciumcarbonat im Bereich von 29 Gewichtsprozenten und Aluminiumhydroxid im Bereich von 55 Gewichtsprozenten aufweist.

8. Decklage nach einem der Ansprüche 1 bis 7,
**dadurch gekennzeichnet, dass**
die Beschichtung Zusatzstoffe aufweist.

9. Decklage nach Anspruch 8,
**dadurch gekennzeichnet, dass**
die Zusatzstoffe Netzmittel im Bereich von 0,1 Gewichtsprozenten, Cellulosederivate im Bereich von 0,8 Gewichtsprozenten sowie ggf. Farbstoffe im Bereich von 0,2 Gewichtsprozenten aufweisen.

## Claims

1. Cover ply (1) for plate-shaped bodies (3) in the form of a sheetlike structure, for application as a load-bearing element of unrollable or unfoldable tracks onto insulant plates based on rigid foam such as foamed polyurethane or polystyrene, with a carrier sheet (4) constructed to be flexible and including a coating (5) based on mineral materials with organic-based binder content,
**characterized in that**
the binder content of the coating (5) includes a dispersion composed of styrene and acrylic esters, styrene-butadiene copolymer and also includes an acrylic copolymer dispersion, wherein the fractions of the dispersion composed of styrene and acrylic esters are in the region of 5 per cent by weight, the fractions of the dispersion composed of styrene-butadiene copolymer are in the region of 8 per cent by weight and the fractions of the acrylic copolymer dispersion are in the region of 2 per cent by weight.

2. Cover ply according to Claim 1, **characterized in that** the coating (5) is positioned on that flat side of the carrier sheet (4) which faces away from the plate-shaped body (3) when the cover ply is put to its intended use.

3. Cover ply according to Claim 1 or 2, **characterized in that** the carrier sheet is constructed as a glass fibre web and includes proportions of glass fibres and polyester fibres.

4. Cover ply according to Claim 3, **characterized in that** the glass fibre proportion is in the region of 80 per cent by weight and the polyester fibre proportion is in the region of 20 per cent by weight.

5. Cover ply according to Claim 1, **characterized in that** the web fraction of the carrier sheet (4) is predominantly constructed as a polyester web.

6. Cover ply according to any one of Claims 1 to 5, **characterized in that** the mineral materials of the coating (5) include calcium carbonate and aluminium hydroxide.

7. Cover ply according to Claim 6, **characterized in that** the coating (5) includes calcium carbonate in the region of 29 per cent by weight and aluminium hydroxide in the region of 55 per cent by weight.

8. Cover ply according to any one of Claims 1 to 7, **characterized in that** the coating includes added substances.

9. Cover ply according to Claim 8, **characterized in that** the added substances include wetting agents in the region of 0.1 per cent by weight, cellulose derivatives in the region of 0.8 per cent by weight and also, optionally, dyes in the region of 0.2 per cent by weight.

## Revendications

1. Couche supérieure (1) pour corps en forme de plaques (3) sous la forme d'une structure plate destinée à être appliquée en tant qu'élément support de bandes enroulées ou pliées sur des plaques de matériau isolant à base d'une mousse dure telle que du polyuréthanne ou du polystyrène expansé, comprenant une bande support flexible (4) qui comporte un revêtement (5) à base de matériaux minéraux contenant une fraction de liant de base organique, **caractérisée en ce que** la fraction de liant du revêtement (5) comprend une dispersion de styrène et d'esters de l'acide acrylique, d'un copolymère styrène-butadiène et une dispersion d'un copolymère acrylique, la proportion de la dispersion de styrène et d'esters de l'acide acrylique se situant aux environs de 5 pourcent en poids, la proportion de la dispersion de copolymère styrène-butadiène aux environs de 8 pourcent en poids et la proportion de la dispersion de copolymère acrylique aux environs de 2 pourcent en poids.

2. Couche supérieure selon la revendication 1, **caractérisée en ce que** le revêtement (5) est appliqué sur le côté de la bande support (4) qui est opposé au corps en forme de plaque (3) lors de l'utilisation prévue de la couche supérieure.

3. Couche supérieure selon la revendication 1 ou 2, **caractérisée en ce que** la bande support est formée d'un non-tissé de fibres de verre et comprend proportionnellement des fibres de verre et des fibres de polyester.

4. Couche supérieure selon la revendication 3, **caractérisée en ce que** la proportion de fibres de verre se situe aux environs de 80 pourcent en poids et la proportion de fibres de polyester aux environs de 20 pourcent en poids.

5. Couche supérieure selon la revendication 1, **caractérisée en ce que** la fraction de non-tissé de la bande support (4) est essentiellement formée d'un non-tissé de polyester.

6. Couche supérieure selon l'une quelconque des revendications 1 à 5, **caractérisée en ce que** les matériaux minéraux du revêtement (5) comprennent du carbonate de calcium et de l'hydroxyde d'aluminium.

7. Couche supérieure selon la revendication 6, **caractérisée en ce que** le revêtement (5) comprend du carbonate de calcium aux environs de 29 pourcent en poids et de l'hydroxyde d'aluminium aux environs de 55 pourcent en poids.

8. Couche supérieure selon l'une quelconque des revendications 1 à 7, **caractérisée en ce que** le revêtement comprend des additifs.

9. Couche supérieure selon la revendication 8, **caractérisée en ce que** les additifs comprennent des agents mouillants aux environs de 0,1 pourcent en poids, des dérivés de cellulose aux environs de 0,8 pourcent en poids et éventuellement des colorants aux environs de 0,2 pourcent en poids.
